# EUROPEAN PATENT APPLICATION

(11) **EP 4 794 144 A1**
(43) Date of publication of application: **19.08.2026**
(21) Application number: 25870676.1
(22) Date of filing: 14.08.2025
(51) Int. Cl.: H02G 1/16

(54) **METHOD FOR PLUGGING AND REPAIRING OIL-FILLED SUBMARINE CABLE**

(30) Priority: 24.09.2024 CN 202411332669
(71) Applicant: Electric Power Research Institute. China Southern Power Grid, Guangzhou, Guangdong 510663 (CN)
(72) Inventor: HUI, Baojun, Guangzhou, Guangdong 510663 (CN); HOU, Shuai, Guangzhou, Guangdong 510663 (CN); FU, Mingli, Guangzhou, Guangdong 510663 (CN); FENG, Bin, Guangzhou, Guangdong 510663 (CN); LIU, Jie, Guangzhou, Guangdong 510663 (CN); ZHAO, Linjie, Guangzhou, Guangdong 510663 (CN); JIA, Lei, Guangzhou, Guangdong 510663 (CN); ZHU, Wenbo, Guangzhou, Guangdong 510663 (CN); ZHAN, Yunpeng, Guangzhou, Guangdong 510663 (CN); CAI, Xipeng, Guangzhou, Guangdong 510663 (CN); LU, Yong, Guangzhou, Guangdong 510663 (CN); CHEN, Xipeng, Guangzhou, Guangdong 510663 (CN); JING, Mingkang, Guangzhou, Guangdong 510663 (CN); CHEN, Yun, Guangzhou, Guangdong 510663 (CN); CHENG, Zhongkun, Guangzhou, Guangdong 510663 (CN)
(74) Representative: Hoffmann Eitle
(86) International application number: PCT/CN2025/114543
(87) International publication number: WO 2026/066772

(57) **Abstract**

A method for plugging and repairing an oil-filled submarine cable, comprising the following steps: stripping off an outer sheath of a section of an oil-filled submarine cable (10) where a leakage point is located, so as to expose an armor layer (18); sleeving a main housing (21) of an oil-filled submarine cable plugging device on the armor layer (18) of the section of the oil-filled submarine cable (10) where the leakage point is located, such that a sealing assembly (22) in the main housing (21) separates, in the axial direction of the main housing (21), the space between the main housing (21) and the oil-filled submarine cable (10) into an oil leakage area (213) and at least one sealing area (214) located on each of both sides of the oil leakage area (213), and the leakage point is located in the oil leakage area (213); opening an oil discharge valve (23) located at the lower side of the oil leakage area (213); injecting a sealant into each of the sealing areas (214) until the sealing areas are filled with the sealant (214); waiting for the sealant to cure; and closing the oil discharge valve (23). The method for plugging and repairing an oil-filled submarine cable can plug leakages of the oil-filled submarine cable (10) without damaging the armor layer (18).

## Description

### TECHNICAL FIELD

The present application relates to the field of oil-filled submarine cable repair technology, and in particular to a method for sealing and repairing an oil-filled submarine cable.

### BACKGROUND

An oil-filled submarine cable is a submarine cable using an insulating oil as a pressurized fluid, and allows the insulating oil to flow freely in the cable. When an oil-filled submarine cable is damaged, the insulating oil in the oil-filled submarine cable will leak, polluting seawater and affecting the stable operation of the power grid.

Currently, repairing methods for oil-filled submarine cables include splicing repair, waterproofing repair, and sealing repair. The sealing repair, which involves creating a physical seal outside the damaged region without repairing the cable itself, offers advantages such as simplicity, speed, and low cost.

Most current repairing methods for sealing the oil-filled submarine cables are modeled after repair methods used for submarine oil and gas pipelines. However, conventional sealing repair methods for submarine oil and gas pipelines does not have ideal sealing repairing effects for the oil-filled submarine cables.

### SUMMARY

Therefore, it is necessary to provide a method for sealing and repairing an oil-filled submarine cable to improve a sealing repairing effect for the oil-filled submarine cable leakage.

The present application provides a method for sealing and repairing an oil-filled submarine cable, which includes the following steps:
peeling off an outer sheath of a section of the oil-filled submarine cable where a leak point is located to expose an armor layer;
sleeving a main housing of an oil-filled submarine cable sealing device on the armor layer of the section where the leak point is located, such that the sealing assembly in the main housing divides a space between the main housing and the oil-filled submarine cable along an axial direction of the main housing into an oil drain region and at least one sealing region on each of two sides of the oil drain region, and the leak point is located in the oil drain region;
opening an oil drain valve located below the oil drain region;
injecting glue into each of the sealing regions until the glue fills each of the sealing regions;
waiting for the glue to cure; and
closing the oil drain valve.

The technical solution will be further explained below:

In one of the embodiments, the step of injecting glue into each of the sealing regions until the glue fills the sealing regions includes:
connecting a glue injection valve located below the sealing regions to a glue injection system;
opening the glue injection valve and a glue discharge valve located above the sealing regions;
first injecting glue into the sealing regions via the glue injection valve by the glue injection system at a first preset pressure;
closing the glue discharge valve after the glue has been continuously flowing out of the glue discharge valve for a first time period;
closing the glue injection valve again after the glue injection system maintains pressure in the sealing regions at a second preset pressure for a second time period;

In one embodiment, the glue includes a high-penetrating agent and a low-penetrating agent. The glue injection system injects the glue into the sealing regions through the glue injection valve at a first preset pressure. After the glue discharge valve continuously discharges the glue for a first time period, the glue discharge valve is closed. The step of closing the glue injection valve after the glue injection system continuously maintains pressure in the sealing regions at the second preset pressure for the second time period includes:
first injecting the high-penetrating agent into the sealing regions by the glue injection system at a first preset pressure;
closing the glue discharge valve after the high-penetrating agent continuously flows out of the glue discharge valve for a first time period;
opening the glue discharge valve again after the glue injection system maintains pressure in the sealing regions at a second preset pressure for a second time period;
then injecting the low-permeability agent into the sealing regions by the glue injection system at the first preset pressure;
closing the glue discharge valve after the low-penetrating agent continuously flows out of the glue discharge valve for the first time period;
closing the glue injection valve after the glue injection system maintains pressure in the sealing regions at the second preset pressure continuously for the second time period.

In one of the embodiments, the first preset pressure is in a range from 0.2 MPa to 0.4 MPa; and/or, the second preset pressure is in a range from 0.5 MPa to 1 MPa.

In one of the embodiments, the first time period is in a range from 10 seconds to 15 seconds; and/or, the second time period is in a range from 1 minute to 3 minutes.

In one of the embodiments, the high-penetration agent is fluorosilicone rubber, organic silica gel, or polyurethane glue; and/or, the low-penetration agent is fluorosilicone raw rubber or silicone rubber.

In one of the embodiments, the step of waiting for the glue to cure includes:
waiting for the glue to cure for a time period greater than or equal to 4 hours.

In one of the embodiments, the step of closing the oil drain valve further includes the following steps:
checking for leakage in the oil-filled submarine cable;
if leakage still occurs, extension housings are mounted at both ends of the main housing, such that the extension housings are sleeved on the armor layer of the oil-filled submarine cable, and spaces between the extension housings and the oil-filled submarine cable form sealing regions.
injecting glue into the sealing regions of the extension housings until the glue fills the sealing regions; and
waiting for the glue in the extension housings to cure.

In one of the embodiments, the step of waiting for the glue in the extension housings to cure further includes the following steps:
checking for leakage in the oil-filled submarine cable again;
if leakage still occurs, mounting another extension housing at an end of the extension housing away from the main housing;
injecting glue into the sealing regions of the additionally mounted extension housings until the glue fills the sealing regions; and
waiting for the glue in the additionally mounted extension housings to cure.

In one of the embodiments, prior to the step of injecting glue into each of the sealing regions until the glue fills the sealing regions, the method for sealing and repairing the oil-filled submarine cable further includes:
connecting a glue injection valve located below the sealing regions to a cleaning system;
opening the glue injection valve and a glue discharge valve located above the sealing regions;
introducing, by the cleaning system, dry air into the sealing regions through the glue injection valve to clean an insulating oil and seawater in the sealing regions; and
closing the glue discharge valve and the glue injection valve sequentially, and disconnecting the cleaning system from the glue injection valve.

In the aforementioned method for sealing and repairing the oil-filled submarine cable, the outer sheath of the section of the oil-filled submarine cable where the leak point is located is first peeled off, and the armor layer is exposed. Then, the main housing is sleeved on the armor layer. The sealing assembly in the main housing divides the space between the main housing and the oil-filled submarine cable into the oil drain region and at least one sealing region on each of the two sides of the oil drain region. Simultaneously, the leak point is located in the oil drain region, allowing the leaked insulating oil to be drained through the oil drain valve. This significantly reduces the possibility of the insulating oil leaking into the sealing regions, preventing the glue in the sealing regions from being washed away by oil. This ensures the stability of the subsequent glue injection process into the sealing regions. Therefore, glue injection can be performed simultaneously during oil drainage, improving the efficiency of the repairing sealing process. Simultaneously, by applying glue into the sealing regions under certain pressure, the glue can penetrate along a copper strip gap of the armor layer and a gap between the armor layer and the PE layer to the outside of the PE layer, thus filling the copper strip gap of the armor layer and the gap between the armor layer and the PE layer. This prevents the insulating oil from leaking in an axial direction along the copper strip gap of the armor layer and the gap between the armor layer and the PE layer, thereby achieving leakage sealing of the oil-filled submarine cable outside the PE layer without damaging the armor layer.

### BRIEF DESCRIPTION OF THE DRAWINGS

The accompanying drawings that constitute a part of the present invention are used to provide a further understanding of the present invention. Schematic embodiments of the present invention and descriptions thereof are used to explain the present invention, and do not constitute improper limitations of the present invention.

To describe the technical solutions in the embodiments of the present invention more clearly, the following briefly describes the accompanying drawings required for describing the embodiments. Apparently, the accompanying drawings in the following description show merely some embodiments of the present invention, and those who skill in the art may still derive other drawings from these accompanying drawings without creative efforts.

In addition, the drawings are not drawn in 1:1 ratio, and the relative sizes of the various elements are drawn in the drawings only as examples, and not necessarily in true proportion. In the drawings:
FIG. 1 is a schematic diagram of an oil-filled submarine cable according to an embodiment.
FIG. 2 is a schematic diagram of a repairing device for sealing the oil-filled submarine cable according to an embodiment.
FIG. 3 is a cross-sectional view of the repairing device for sealing the oil-filled submarine cable according to an embodiment.
FIG. 4 is a flowchart illustrating a method for sealing and repairing the oil-filled submarine cable according to an embodiment.

### Description of the Reference Numerals:

10: oil-filled submarine cable; 11: oil channel; 12: conductor layer; 13: insulating layer; 14: lead protective layer; 15: first nonwoven fabric layer; 16: PE layer; 17: second nonwoven fabric layer; 18: armor layer; 21: main housing; 211: first half-housing; 212: second half-housing; 213: oil drain region; 214: sealing region; 22: sealing assembly; 221: sealing strip; 222: annular sealing gasket; 23: oil drain valve; 251: glue injection valve; 252:glue discharge valve; 30: extension housing.

### DETAILED DESCRIPTION OF THE EMBODIMENTS

In order to make the aforementioned objects, features and advantages of the present invention more clearly understood, the specific embodiments of the present invention will be described in detail below with reference to the accompanying drawings. In the following description, numerous specific details are set forth in order to provide a thorough understanding of the present invention. However, the present invention can be implemented in many other ways different from those described herein, and those skilled in the art can make similar improvements without departing from the connotation of the present invention. Therefore, the present invention is not limited by the specific embodiments disclosed below.

In the description of the present invention, it should be understood that if the terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential", etc. appear, the orientation or position relationship indicated by these terms is based on the orientation or position relationship shown in the drawings, which is only for the convenience of describing the present invention and simplifying the description, rather than indicating or implying that the device or element referred to must have a specific orientation, be constructed and operated in a specific orientation, and therefore cannot be understood as limiting the present invention.

In addition, if the terms "first" and "second" appear, these terms are only used for descriptive purposes and cannot be understood as indicating or implying relative importance or implicitly indicating the number of technical features indicated. Thus, the features defined as "first" and "second" may explicitly or implicitly include at least one of the features. In the description of the present invention, if the term "a plurality of" appears, the meaning of "a plurality of" is at least two, such as two, three, etc., unless otherwise clearly and specifically defined.

In the present invention, unless otherwise clearly specified and limited, if the terms "mount", "connect together", "connect", "fix", etc. appear, these terms should be understood in a broad sense. For example, it can be a fixed connection, a detachable connection, or an integrated connection; it can be a mechanical connection or an electrical connection; it can be a direct connection or an indirect connection through an intermediate medium, it can be the internal connection of two elements or the interaction relationship between two elements, unless otherwise clearly defined. For ordinary technical people in the art, the specific meaning of the aforementioned terms in the present invention can be understood according to the specific circumstances.

In the present invention, unless otherwise clearly specified and limited, if there is a description that a first feature is "on" or "below" a second feature, etc., or similar description, it may mean that the first feature and second feature are in direct contact, or the first feature and second feature are in indirect contact through an intermediate medium. Also, the first feature is "above", "over" and "on" the second feature may mean that the first feature is directly above or obliquely above the second feature, or simply means that the first feature has a higher level than the second feature. The first feature being "below", "beneath" and "under" the second feature may mean that the first feature is directly or obliquely below the second feature, or simply means that the first feature has a lower level than the second feature.

It should be noted that if an element is referred to as being "fixed to" or "disposed on" another element, it may be directly on the other element or there may be a central element. If an element is considered to be "connected to" another element, it may be directly connected to the other element or there may be a central element at the same time. If present, the terms "vertical", "horizontal", "upper", "lower", "left", "right" and similar expressions used in the present invention are only for illustrative purposes and do not represent the only implementation method.

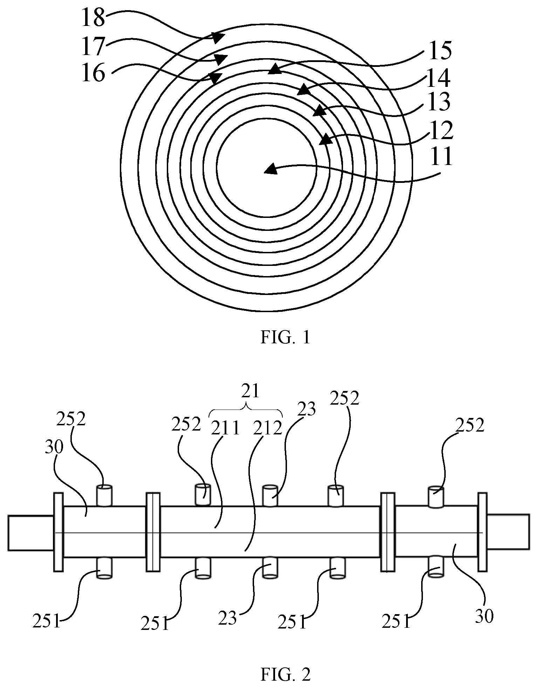

As previously mentioned, conventional repairing methods for sealing submarine oil and gas pipelines are not ideal on sealing repairing effects for the oil-filled submarine cables 10. The inventors, through extensive research, discovered that the reason lies in the significant differences between structures of the oil-filled submarine cables 10 and the submarine oil and gas pipelines. Specifically, referring to FIG. 1, conventionally, an oil-filled submarine cable 10 includes, from the inside out, the following layers: an oil channel 11, a conductor layer 12, an insulating layer 13, a lead protective layer 14, a first nonwoven fabric layer 15, a PE layer 16, a second nonwoven fabric layer 17, an armor layer 18, and an outer sheath (not shown). The gaps between the armor layer 18, the PE layer 16, and the outer sheath are relatively large, and the armor layer 18 has a cylindrical structure composed of a plurality of copper strips tightly arranged circumferentially, with axial gaps between the copper strips. Therefore, when the oil-filled submarine cable 10 is damaged and the insulating oil inside the oil channel 11 leaks to the outside of the oil-filled submarine cable 10, the insulating oil may leak axially between the armor layer 18, the PE layer 16 and the outer sheath, and the copper strip gap of the armor layer 18.

Current repairing sealing methods cannot seal the gaps between armor layer 18, PE layer 16, and the outer sheath, thus failing to resolve the axial leakage problem of the oil-filled submarine cable 10. To achieve sealing, the armor layer 18 of the submarine cable must be damaged, and sealing must be applied from a surface of the PE layer 16 of the submarine cable. Damage to the armor layer 18 of the submarine cable causes the oil-filled submarine cable 10 to lose its ability to withstand tensile loads. Considering the actual operating conditions of the oil-filled submarine cable 10, an axial load of the oil-filled submarine cable 10 are unavoidable. Therefore, there is an urgent need to develop an effective method for sealing insulation oil leakage in the oil-filled submarine cable 10.

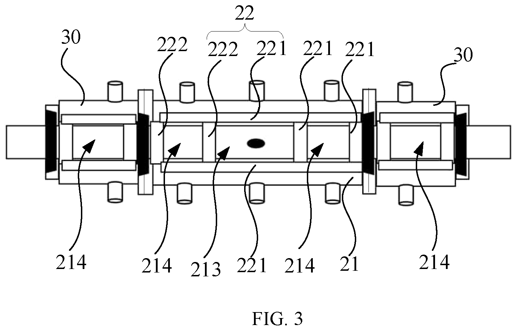

Accordingly, one embodiment of the present invention provides a method for sealing and repairing the oil-filled submarine cable 10, which can address the axial leakage problem of the oil-filled submarine cable 10 without damaging the armor layer 18 of the submarine cable 10. To better understand the technical solution of the present application, we will first briefly introduce a repairing device for sealing the oil-filled submarine cable 10 used in the method for sealing and repairing the oil-filled submarine cable 10 according to one embodiment. Specifically, referring to FIG. 2 and FIG. 3, the repairing device for sealing the oil-filled submarine cable 10 according to one embodiment includes a main housing 21 and a sealing assembly 22. The main housing 21 is configured to sleeve on a section of the oil-filled submarine cable 10 where the leak point is located. The sealing assembly 22 is provided in the main housing 21. The sealing assembly 22 is configured to divide a space between the main housing 21 and the oil-filled submarine cable 10 along an axial direction of the main housing 21 into an oil drain region 213 corresponding to the leak point and at least one sealing region 214 on each of two sides of the oil drain region 213. The oil drain region 213 is in communication with an oil drain valve 23. For example, two drain valves are provided, one of the two drain valves is located below the oil drain region 213. Each of the sealing regions 214 is provided with a glue injection valve 251 and a glue discharge valve 252, and the glue injection valve 251 and the glue discharge valve 252 are arranged opposite to each other along a radial direction of the main housing 21, and the glue injection valve 251 is located below the glue discharge valve 252.

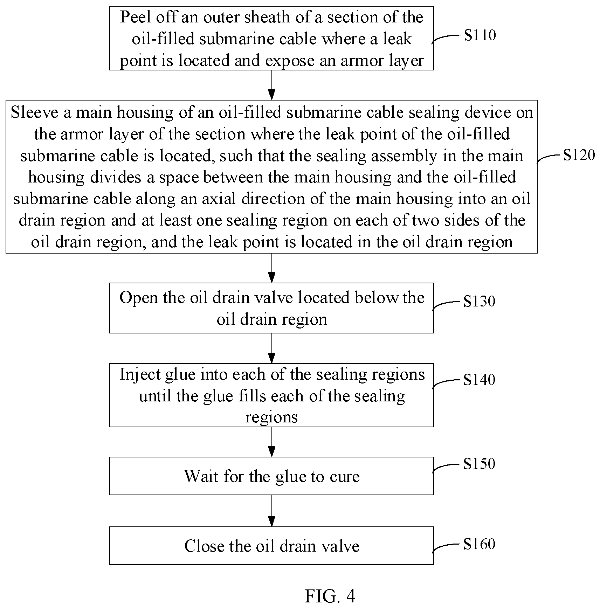

Specifically, referring to FIG. 4, the method for sealing and repairing the oil-filled submarine cable 10 according to one embodiment includes the following steps:
In step S110, an outer sheath of a section of the oil-filled submarine cable 10 where a leak point is located is peel off to expose the armor layer 18.

In step S120, a main housing 21 is sleeved on the armor layer 18 of the section where the leak point of the oil-filled submarine cable 10 is located, such that the sealing assembly 22 in the main housing 21 divides a space between the main housing 21 and the oil-filled submarine cable 10 along an axial direction of the main housing 21 into an oil drain region 213 and at least one sealing region 214 located on each of the two sides of the oil drain region 213, and the leak point is located in the oil drain region 213.

Specifically, referring to FIG. 1, in one embodiment, the main housing 21 includes a first half-housing 211 and a second half-housing 212, and the first half-housing 211 and the second half-housing 212 are connected to each other and together form a cylindrical structure. During mounting, the first half-housing 211 and the second half-housing 212 are oppositely arranged and sleeved on the section of the oil-filled submarine cable 10 where the leak point is located. The first half-housing 211 and the second half-housing 212 are then locked together to complete the mounting of the main housing 21.

Referring to FIG. 2, the sealing assembly 22 includes a sealing strip 221 and at least two annular sealing gaskets 222. The sealing strip 221 is provided in a joint gap between the first half-housing 211 and the second half-housing 212, thereby sealing the joint gap between the first half-housing 211 and the second half-housing 212 to prevent insulating oil or glue from leaking therethrough. Furthermore, all the annular sealing gaskets 222 are axially spaced apart between the main housing 21 and the oil-filled submarine cable 10, and form a sealing fit with both the main housing 21 and the oil-filled submarine cable 10, such that the space between the main housing 21 and the oil-filled submarine cable 10 is divided into an oil drain region 213 and at least one sealing region 214 on each of the two sides of the oil drain region 213.

In step S130, the oil drain valve 23 located below the oil drain region 213 is opened.

Specifically, the oil drain region 213 is in communication with two oil drain valves 23 arranged opposite to each other along the radial direction of the main housing 21. During oil drainage, the oil drain valve 23 located below is opened. Since a density of insulating oil is lower than a density of seawater, seawater can be discharged simultaneously with the insulating oil.

In step S140, glue is injected into each of the sealing regions 214 until each of the sealing regions 214 is fully filled.

Specifically, the glue can be injected into the sealing regions 214 via an underwater glue injection system.

In step S150, wait for the glue to cure.

In step S160, the oil drain valve 23 is closed.

In the aforementioned method for sealing and repairing the oil-filled submarine cable 10, the outer sheath of the section where the leak point of the oil-filled submarine cable 10 is located is first peeled off to expose the armor layer 18. Then the main housing 21 is sleeved on the armor layer 18, such that the sealing assembly 22 inside the main housing 21 divides the space between the main housing 21 and the oil-filled submarine cable 10 into the oil drain region 213 and at least one sealing region 214 on each of the two sides of the oil drain region 213, and simultaneously the leak point is located in the oil drain region 213. As such, the leaked insulating oil can be drained from the oil drain region 213 through the oil drain valve 23, which greatly reduces the possibility of insulating oil leaking into the sealing regions 214. This prevents the glue in the sealing regions 214 from being washed away by the oil, ensuring the stability of the subsequent glue injection process into the sealing regions 214. Therefore, glue injection can be carried out synchronously during oil drainage, improving the efficiency of plugging and repairing. Simultaneously, by injecting glue into the sealing regions 214 under a certain pressure, the glue can penetrate along the copper strip gap of the armor layer 18 and the gap between the armor layer 18 and the PE layer 16 to the outside of the PE layer 16 under pressure, so as to fill the copper strip gap of the armor layer 18 and the gap between the armor layer 18 and the PE layer 16. This avoids the possibility of leakage of insulating oil in an axial direction along the copper strip gap of the armor layer 18 and the gap between the armor layer 18 and the PE layer 16, thereby realizing leakage sealing of the oil-filled submarine cable 10 at the part outside the PE layer 16 without damaging the armor layer 18.

In one embodiment, step S140 includes the following sub-steps:
In step S141, a glue injection valve 251 located below the sealing regions 214 is connected to the glue injection system.
In step S142, the glue injection valve 251 and a glue discharge valve 252 located above the sealing regions 214 are opened.
In step S143, glue is injected into the sealing regions 214 by the glue injection system through the glue injection valve 251 at a first preset pressure.

Specially, each of the sealing regions 214 is provided with a glue injection valve 251 and a glue discharge valve 252, and the glue injection valve 251 and the glue discharge valve 252 are arranged opposite to each other along the radical direction of the main housing 21, and the glue injection valve 251 is located below the glue discharge valve 252. The glue injection system injects glue into the sealing regions 214 from bottom to top through the glue injection valve 251. Since the density of the sealant is higher than the density of seawater, injecting glue from bottom to top ensures that seawater inside the sealing regions 214 can be discharged through the glue discharge valve.

For example, in one embodiment, the first preset pressure is in a range from 0.2 MPa to 0.4 MPa. Specifically, if the first preset pressure is too low, the glue cannot be injected into the sealing regions 214. If the first preset pressure is too high, it will easily exceed the safe pressure-bearing range of the oil-filled submarine cable 10 and increase the cost. By arranging the first preset pressure in the range from 0.2 MPa to 0.4 MPa, smooth injection of glue into the sealing regions 214 is ensured at a relatively low cost.

In step S144, the glue discharge valve 252 is closed after glue continuously flows out of the glue discharge valve 252 for a first time period.

For example, in one embodiment, the first time period is in a range from 10s to 15s. When glue continuously flows out of the glue discharge valve 252 for 10s to 15s, it indicates that the sealing regions 214 have been completely filled with glue, ensuring that all seawater is discharged and improving the sealing effect of the glue in the sealing regions 214.

In step S145, the glue injection valve 251 is closed after the glue injection system maintains pressure in the sealing regions 214 at the second preset pressure continuously for a second time period.

Specifically, after closing the glue discharge valve 252, maintaining pressure in the sealing regions 214 for a period of time ensures that the glue fully penetrates into the copper strip gap of the armor layer 18 and the gap between the armor layer 18 and the PE layer 16, so as to fill the copper strip gap of the armor layer 18 and the gap between the armor layer 18 and the PE layer 16. This prevents the leakage of insulating oil in an axial direction along the copper strip gap of the armor layer 18 and the gap between the armor layer 18 and the PE layer 16. Simultaneously, it ensures that the sealing regions 214 still maintains a high internal pressure after the glue is cured, thereby enhancing the sealing effect.

For example, in one embodiment, the second preset pressure has a range from 0.5 MPa to 1 MPa. Specifically, after the repairing device for sealing the oil-filled submarine cable 10 is mounted, the repairing device for sealing the oil-filled submarine cable 10 will exert a certain squeezing effect on the oil-filled submarine cable 10. To ensure that the external pressure applied to the oil-filled submarine cable 10 is within its safe bearing range, it is necessary to analyze the safe pressure-bearing stability range of the oil-filled submarine cable 10 through theoretical and experimental studies. According to simulation analysis, when the external pressure applied to the oil-filled submarine cable 10 reaches 2 MPa, the maximum equivalent stress of the PE layer 16 of the oil-filled submarine cable exceeds the yield limit of the material, and yield failure may occur in the PE layer 16 of the oil-filled submarine cable 10. Simultaneously, experimental analysis shows that when the radial non-uniform pressure applied to the oil-filled submarine cable 10 reaches 2.0 MPa, the lead protective layer 14 of the oil-filled submarine cable 10 will reach its yield limit and undergo deformation. Therefore, based on theoretical and experimental analysis, the applicant of the present application arranges the upper limit of the second preset pressure to no more than 1 MPa. Simultaneously, if the second preset pressure is too low, the glue cannot penetrate into the copper strip gap of the armor layer and the gap between the armor layer and the PE layer. Moreover, the internal pressure of the sealing regions 214 after the sealant cures cannot be guaranteed, resulting in poor sealing performance. Therefore, based on theoretical and experimental analysis, the inventors of the present application arranges the lower limit of the second preset pressure to be higher than 0.5 MPa.

Furthermore, the second time period, that is, a duration for maintaining pressure in the sealing regions 214, is in a range from 1 min to 3 min. Specifically, an excessively short duration for maintaining pressure fails to achieve a satisfactory effect, while an excessively long duration for maintaining pressure increases the cost. By arranging the duration for maintaining pressure to be in a range from 1 min to 3 min, the cost is reasonably controlled while ensuring the pressure maintaining effect simultaneously.

Optionally, in one embodiment, the glue used in the method for sealing and repairing the oil-filled submarine cable 10 includes a high-penetration agent and a low-penetration agent. Accordingly, in one embodiment, the aforementioned steps S143 to S145 specifically include the following steps:
In step S1431, the high-penetration agent is first injected into the sealing regions 214 by the glue injection system at the first preset pressure.
In step S1432, the glue discharge valve 252 is closed after the high-penetration agent continuously flows out of the glue discharge valve 252 for a first time period.
In step S1433, the glue discharge valve 252 is opened again after the glue injection system maintains pressure in the sealing regions 214 at the second preset pressure for the second time period.
In step S1434, a low-penetration agent is then injected into the sealing regions 214 by the glue injection system at the first preset pressure.
In step S1435, the glue discharge valve 252 is closed after the low-penetration agent continuously flows out of the glue discharge valve 252 for the first time period.
In step S1436, the glue injection valve 251 is closed after the glue injection system maintains a second preset pressure in the sealing regions 214 continuously for the second time period.

Specifically, the high-penetration agent is a sealant with low viscosity that can penetrate deep into micro-gaps and achieve sealing and leakage prevention after curing. The low-penetration agent is a material with excellent elasticity and flexibility. It does not easily enter micro-gaps but provides filling and pressure-maintaining functions, and is capable of balancing the pressure of insulating oil leaking from the oil-filled submarine cable 10. By first injecting the high-penetration agent into the sealing regions 214 and maintaining the pressure for a certain period, then injecting the low-penetration agent to displace the high-penetration agent and maintaining the pressure for a certain period, the initially injected high-penetration agent can more easily penetrate into the copper strip gap of the armor layer and the gap between the armor layer and the PE layer. After the low-penetration agent displaces the high-penetration agent, the low-penetration agent can balance the pressure of insulating oil leaking from the oil-filled submarine cable 10 and simultaneously prevent the cured high-penetration agent from being squeezed out of each of the interlayer gaps. This further improves the sealing repairing effect.

Optionally, in one embodiment, the high-penetration agent includes, but is not limited to, fluorosilicone rubber, organic silica gel, polyurethane glue, etc. For example, in one embodiment, fluorosilicone gel with a density of approximately 1.27 g/mm³ may be used as the high-penetration sealant. Optionally, in one embodiment, the low-penetration agent may be raw fluorosilicone rubber or silicone rubber.

Specifically, the step of waiting the glue to cure includes the following sub-step:
In step S151, wait the glue to cure for a time period greater than or equal to 4 hours.

Specifically, a curing time of no less than 4 hours ensures full curing of the glue and guarantees the sealing repairing effect after the glue is cured.

Optionally, referring to FIG. 2 and FIG. 3, in one embodiment, after the step that the oil drain valve 23 is closed, the following steps are further included:
In step S161, the oil-filled submarine cable 10 is checked for leakage.

Specifically, whether insulating oil leaks from two ends of the main housing 21 can be observed by instruments or naked eyes.

In step S162, if leakage still occurs, extension housings 30 are mounted at two ends of the main housing 21, such that the extension housings 30 are sleeved on the armor layer 18 of the oil-filled submarine cable 10, and spaces between the extension housings 30 and the oil-filled submarine cable 10 form sealing regions 214.

Specifically, the extension housing 30 has a cylindrical structure and is sealingly connected to the main housing 21. A sealing assembly 22 is also provided in the extension housing 30, and the sealing assembly 22 encloses and seals the spaces between the extension housings 30 and the oil-filled submarine cable 10 to form the sealing regions 214.

In step S163, glue is injected into the sealing regions 214 of the extension housing 30 until the glue fills the sealing regions 214.

Specifically, furthermore, each of the sealing regions 21433 of the extension housing 30 is also in communication with a glue injection valve 251 and a glue discharge valve 252. Furthermore, the step that glue is injected into the sealing regions 214 of the extension housing 30 can refer to the aforementioned steps S1431 to S1436 that glue is injected into the sealing regions 214 of the main housing 21, which will not be repeated here.

In step S164, wait the glue in the extension housing 30 to cure.

Specifically, when the sealing effect of the main housing 21 is unsatisfactory, by adding the extension housing 30 at an end portion of the main housing 21, the number of sealing regions 214 in an axial direction of the main housing 21 can be increased. Then, by injecting glue into the sealing regions 214 of the extension housing 30, the axial sealing effect can be enhanced and leakage in the axial direction can be avoided.

Further, in one embodiment, after step S164, the following steps are further included:

In step S165, the oil-filled submarine cable 10 is checked for leakage again.

In step S167, if leakage still occurs, another extension housing 30 is mounted at an end of the extension housing 30 away from the main housing 21.

In step S168, glue is injected into the sealing regions 214 of the additionally mounted extension housing 30 until the glue fills the sealing regions 214.

In step S169, the glue in the additionally mounted extension housing 30 is waited to cure.

Specifically, the mounting method of the additionally mounted extension housing 30 and the glue injection method of the additionally mounted extension housing 30 may refer to the above steps S161 to S164, which will not be repeated herein. Further, steps S165 to S169 are repeated until no leakage occurs in the oil-filled submarine cable 10, so as to ensure that the leakage of the oil-filled submarine cable 10 is completely blocked and repaired.

Optionally, in one embodiment, before step S140, glue is injected into each of the sealing regions 214 until each of the sealing regions 214 is filled with glue, the insulating oil and seawater in the sealing regions 214 may be cleaned first. Specifically, the method includes the following steps:
In step S131, the glue injection valve 251 located below the sealing regions 214 is connected to a cleaning system.

Specifically, in one embodiment, the cleaning system may be a high-pressure gas source or an air pump.

In step S132, the glue injection valve 251 and the glue discharge valve 252 located above the sealing regions 214 are opened.

In step S133, dry air is introduced by the cleaning system into the sealing regions 214 through the glue injection valve 251 to clean the insulating oil and seawater in the sealing regions 214.

In step S134, the glue discharge valve 252 and the glue injection valve 251 are closed sequentially, then the cleaning system is disconnected from the glue injection valve 251.

Specifically, dry air is introduced into the sealing regions 214 before glue injection, so as to thoroughly clean impurities such as insulating oil and seawater in the sealing regions 214, avoiding adverse effects on the subsequent glue injection, ensuring the stability of the cured glue, and further guaranteeing the sealing repairing effect.

The technical features of the aforementioned embodiments may be combined arbitrarily. To simplify the description, not all the possible combinations of the technical features in the aforementioned embodiments are described. However, all of the combinations of these technical features should be considered as within the scope of the present invention, as long as such combinations do not contradict with each other.

The above embodiments merely illustrate several embodiments of the present invention, and the description thereof is specific and detailed, but it shall not be constructed as limiting the scope of the disclosure. It should be noted that, for a person of ordinary skill in the art, several variations and improvements may be made without departing from the concept of the present invention, and these are all within the protection scope of the present application. Therefore, the protection scope of the present application shall be subject to the appended claims.

## Claims

1. A method for sealing and repairing an oil-filled submarine cable, comprising the following steps:
peeling off an outer sheath of a section of the oil-filled submarine cable where a leak point is located to expose an armor layer;
sleeving a main housing of an oil-filled submarine cable sealing device on the armor layer of the section where the leak point of the oil-filled submarine cable is located, such that the sealing assembly in the main housing divides a space between the main housing and the oil-filled submarine cable along an axial direction of the main housing into an oil drain region and at least one sealing region on each of two sides of the oil drain region, and the leak point is located in the oil drain region;
opening an oil drain valve located below the oil drain region;
injecting glue into each of the sealing regions until the glue fills each of the sealing regions;
waiting for the glue to cure; and
closing the oil drain valve;
wherein the glue comprises a high-penetrating agent and a low-penetrating agent, and the step of injecting glue into each of the sealing regions until the glue fills each of the sealing regions comprises:
connecting a glue injection valve located below the sealing regions to a glue injection system;
opening the glue injection valve and a glue discharge valve located above the sealing regions;
first injecting, by the glue injection system, the high-penetrating agent into the sealing regions at a first preset pressure;
closing the glue discharge valve after the high-penetrating agent continuously flows out of the glue discharge valve for a first time period;
opening the glue discharge valve again after the glue injection system maintains pressure in the sealing regions at a second preset pressure for a second time period;
injecting, by the glue injection system, the low-permeability agent into the sealing regions at the first preset pressure;
closing the glue discharge valve after the low-penetrating agent continuously flows out of the glue discharge valve for the first time period; and
closing the glue injection valve after the glue injection system maintains pressure in the sealing regions at the second preset pressure continuously for the second time period.

2. The method for sealing and repairing the oil-filled submarine cable according to claim 1, wherein the first preset pressure is in a range from 0.2 MPa to 0.4 MPa;
and/or the second preset pressure is in a range from 0.5 MPa to 1 MPa.

3. The method for sealing and repairing the oil-filled submarine cable according to claim 1, wherein the first time period is in a range from 10s to 15s;
and/or, the second time period is in a range from 1 min to 3 min.

4. The method for sealing and repairing the oil-filled submarine cable according to claim 1, wherein the high-penetration agent is luorosilicone rubber, organic silica gel, or polyurethane glue;
and/or, the low-penetration agent is fluorosilicone raw rubber or silicone rubber.

5. The method for sealing and repairing the oil-filled submarine cable according to claim 1, wherein the step of waiting for the glue to cure comprises:
waiting for the glue to cure for a time period greater than or equal to 4 hours.

6. The method for sealing and repairing the oil-filled submarine cable according to claim 5, wherein after the step of closing the oil drain valve, the method further comprises the following steps:
checking for leakage in the oil-filled submarine cable;
if leakage still occurs, mounting extension housings at both ends of the main housing, such that the extension housings are sleeved on the armor layer of the oil-filled submarine cable, and spaces between the extension housings and the oil-filled submarine cable form sealing regions;
injecting glue into the sealing regions of the extension housings until the glue fills the sealing regions; and
waiting for the glue in the extension housings to cure.

7. The method for sealing and repairing the oil-filled submarine cable according to claim 6, wherein after the step of waiting for the glue in the extension housings to cure, the method further comprises the following steps:
checking for leakage in the oil-filled submarine cable again;
if leakage still occurs, mounting another extension housing at an end of the extension housing away from the main housing;
injecting glue into the sealing regions of the additionally mounted extension housing until the glue fills the sealing regions; and
waiting for the glue in the additionally mounted extension housings to cure.

8. The method for sealing and repairing the oil-filled submarine cable according to claim 1, wherein prior to the step of injecting glue into each of the sealing regions until the glue fills the sealing regions, the method further comprises the following steps:
connecting a glue injection valve located below the sealing regions to a cleaning system;
opening the glue injection valve and the glue discharge valve located above the sealing regions;
introducing, by the cleaning system, dry air into the sealing regions through the glue injection valve to clean an insulating oil and seawater in the sealing regions; and
closing the glue discharge valve and the glue injection valve sequentially, and disconnecting the cleaning system from the glue injection valve.
